# EUROPEAN PATENT APPLICATION

(11) **EP 4 708 042 A1**
(43) Date of publication of application: **11.03.2026**
(21) Application number: 24870021.3
(22) Date of filing: 19.07.2024
(51) Int. Cl.: G06F 9/451

(54) **MULTI-WINDOW DISPLAY METHOD FOR APPLICATION PROGRAM, AND ELECTRONIC DEVICE**

(30) Priority: 25.09.2023 CN 202311256872
(71) Applicant: Huawei Technologies Co., Ltd., Shenzhen, Guangdong 518129 (CN)
(72) Inventor: CHENG, Yiyi, Shenzhen, Guangdong 518129 (CN); ZHOU, Hui, Shenzhen, Guangdong 518129 (CN)
(74) Representative: Thun, Clemens
(86) International application number: PCT/CN2024/106518
(87) International publication number: WO 2025/066466

(57) **Abstract**

This application provides an application multi-window display method and an electronic device. The method includes: An electronic device receives a first operation of a user, where the first operation is used to start an application, the application supports an app multiplier mode, the app multiplier mode includes a first window and a second window, the first window corresponds to a component started by the application, and the second window corresponds to a component created by a system of the electronic device; in response to the first operation, the electronic device creates an activity object and starts the component created by the system, where the activity object includes a process name and a unique identifier of the application; and the component created by the system is started in a process of the application based on the process name and the unique identifier of the application in the activity object. The method provided in this application ensures that both activities corresponding to the first window and the second window are started in a same application process. This ensures that the electronic device simultaneously manages the two display windows, without occupying system memory, thereby improving user experience.

## Description

This application claims priority to Chinese Patent Application No. 202311256872X, filed with the China National Intellectual Property Administration on September 25, 2023 and entitled "APPLICATION MULTI-WINDOW DISPLAY METHOD AND ELECTRONIC DEVICE", which is incorporated herein by reference in its entirety.

### TECHNICAL FIELD

This application relates to the field of electronic technologies, and more specifically, to an application multi-window display method and an electronic device.

### BACKGROUND

With continuous development of smart terminals, devices such as smartphones, tablet computers, and vehicle-mounted displays are increasingly popular, bringing great convenience to people's life, study, and work. With development of screen technologies of electronic devices, users impose increasingly high requirements on multi-task and multi-window processing capabilities of the smart terminals accordingly.

To enhance users' convenience in operating and accessing electronic devices with displays, related technologies support in-app split-screen display, namely, an app multiplier mode. The app multiplier mode can implement dual-window display of application content, where two pages of an application are displayed in two display windows respectively, for example, an application home page and a content page, or two different content pages. This allows users to use one screen for two purposes and improves user experience.

However, activities corresponding to the two display windows are run in an application process and a system process respectively. This increases system memory usage and makes it impossible to manage the two display windows simultaneously, thereby degrading user experience.

### SUMMARY

This application provides an application multi-window display method and an electronic device. The method may run, in a process of a third-party application, an activity created by a system. This ensures simultaneous management of two display windows, without occupying system memory, thereby improving user experience.

According to a first aspect, this application provides an application multi-window display method. The method provided in the first aspect may be performed by an electronic device, or may be performed by a module (for example, a processor, a chip, or a chip system) used in the electronic device, or may be implemented by a logical node, a logical module, or software that can implement all or a part of functions of the electronic device. This is not limited in this application.

Specifically, the method includes: The electronic device receives a first operation of a user, where the first operation is used to start an application, the application supports an app multiplier mode, the app multiplier mode includes a first window and a second window, the first window corresponds to a component started by the application, and the second window corresponds to a component created by a system of the electronic device; in response to the first operation, the electronic device creates an activity and starts the component created by the system, where an activity object includes a process name and a unique identifier of the application; and the component created by the system is started in a process of the application based on the process name and the unique identifier of the application in the activity object.

In the method provided in the first aspect, after the app multiplier mode of the application is enabled based on the first operation of the user, the corresponding activity object is created for the component newly added by the system. The activity object includes the process name and the unique identifier of the application. Therefore, the component newly added by the system is started in the process of the application based on the process name and the unique identifier of the application in the activity object, ensuring that both the components corresponding to the first window and the second window are started in a same application process. This ensures that the two display windows can be simultaneously managed, without occupying system memory, thereby improving user experience.

In a possible implementation of the first aspect, before the electronic device creates the activity object, the method further includes: The system of the electronic device determines the process name and the unique identifier of the application based on the first operation. In this implementation, the system side of the electronic device parses the process name and the unique identifier of the application based on an operation of starting the application by the user. In this way, the component created by the system is started in the process of the application based on the process name and the unique identifier.

In a possible implementation of the first aspect, the process name and the unique identifier of the application are stored in a first field of an intent. In this implementation, the intent describes the to-be-started component, and carries some necessary data of the started component. Therefore, the to-be-started component can be started in the corresponding process by storing the process name and the unique identifier of the application in the first field of the intent.

In a possible implementation of the first aspect, that the electronic device creates the activity object includes: The electronic device creates an empty activity object, reads the process name and the unique identifier in the first field of the intent, and stores the process name and the unique identifier in the empty activity object, to obtain the activity object. In this implementation, the process name and the unique identifier of the application need to be stored in the empty activity object, so that the component created by the system can be started in the corresponding application. In this way, when the activity object is run in a task stack, the activity created by the system is started in the corresponding application.

In a possible implementation of the first aspect, the first field is an extra field.

In a possible implementation of the first aspect, that the component created by the system is started in the process of the application based on the process name and the unique identifier of the application in the activity object includes: when the process name and the unique identifier of the application in the activity object match a process name and a unique identifier of a currently running process, starting, in the currently running process, the component created by the system; or when the process name and the unique identifier of the application in the activity object do not match the process name and the unique identifier of the currently running process, creating a new process based on the process name and the unique identifier of the application in the activity object, and starting, in the new process, the component created by the system. In this implementation, it can be determined, based on the process name and the unique identifier of the application in the activity object, whether the component created by the system is run in an existing process or is run in the created new process. It should be understood that both the existing process and the created new process are processes in the application.

In a possible implementation of the first aspect, the component created by the system is stored in a jar package that is of the system and that is loaded when the application is started.

In this implementation, after the component created by the system is run in the application process, when the application loads a window that needs to be displayed, a component in the window or other function logic on the component is still implemented on the system side. Therefore, when the component created by the system is stored in the jar package that is of the system and that is loaded when the application is started, the application can load the jar package when being started. This ensures that a window corresponding to the activity created by the system can be normally displayed.

For example, the jar package of the system may be any one of framework.jar, hwEmui.jar, and services.jar. Certainly, the jar package that is of the system and that is loaded when the application is started may alternatively be another jar package. This is not specifically limited in embodiments of this application.

In a possible implementation of the first aspect, in response to the first operation, display statuses of a display component of the first window and a display component of the second window are consistent. In this implementation, in response to the first operation, the activity created by the system is started in the process of the application, and the first window and the second window correspond to a same process. In this way, display statuses of a drag component of the first window and a drag component of the second window are consistent.

In a possible implementation of the first aspect, both a drgbar of the first window and a drgbar of the second window are highlighted. The drag component of the first window includes the drgbar of the first window. The drag component of the second window includes the drgbar of the second window. In this implementation, highlighting both the drgbar of the first window and the drgbar of the second window can provide same experience for the user.

In a possible implementation of the first aspect, the second window is displayed on a display of the electronic device in a full-screen mode or as a floating-window.

In a possible implementation of the first aspect, when the application is started, verification on a package name and a unique identifier of the component created by the system is skipped. In this implementation, only a process name and the unique identifier of the component created by the system are modified, and the package name of the component is still a system package name. Therefore, skipping the verification on the package name and the unique identifier of the component created by the system can ensure that the window corresponding to the component created by the system is successfully displayed when the application is started.

In a possible implementation of the first aspect, an operating system of the electronic device is an Android operating system.

According to a second aspect, a communication apparatus is provided. The communication apparatus includes a unit configured to perform each step in the first aspect or any possible implementation of the first aspect.

According to a third aspect, a communication apparatus is provided. The communication apparatus includes at least one processor and a memory. The processor is coupled to the memory. The memory stores program instructions. When the program instructions stored in the memory are executed by the processor, the method according to the first aspect or any possible implementation of the first aspect is performed.

According to a fourth aspect, a communication apparatus is provided. The communication apparatus includes at least one processor and an interface circuit. The at least one processor is configured to perform the method according to the first aspect or any possible implementation of the first aspect.

According to a fifth aspect, an electronic device is provided. The electronic device includes a processor and a memory. The memory is configured to store a computer program. The processor is configured to: invoke the computer program from the memory and run the computer program, to enable the electronic device to perform the method according to the first aspect or any possible implementation of the first aspect.

In a possible implementation of the fifth aspect, the electronic device may be any one of a mobile phone, a tablet, a personal computer, and a head unit.

In a possible implementation of the fifth aspect, an operating system of the electronic device is an Android operating system.

According to a sixth aspect, a computer program product is provided. The computer program product includes a computer program. When being executed by a processor, the computer program is used to perform the method according to the first aspect or any possible implementation of the first aspect.

According to a seventh aspect, a computer-readable storage medium is provided. The computer-readable storage medium stores a computer program. When being executed, the computer program is used to perform the method according to the first aspect or any possible implementation of the first aspect.

According to an eighth aspect, a chip is provided. The chip includes a processor, configured to: invoke a computer program from a memory and run the computer program, to enable a communication device in which the chip is installed performs the method according to the first aspect or any possible implementation of the first aspect.

### BRIEF DESCRIPTION OF DRAWINGS

FIG. 1 is a diagram of an example of a display style of an app multiplier display mode;
FIG. 2 is a diagram of another example of a display style of an app multiplier display mode;
FIG. 3(a) and FIG. 3(b) are a diagram of an example of an interface of an application that is started for the first time;
FIG. 4 is a logic diagram of searching for a startup process of an activity in an Android operating system;
FIG. 5 is a diagram of a structure of an electronic device 100 according to this application;
FIG. 6 is a block diagram of a software structure of an electronic device 100 according to an embodiment of this application;
FIG. 7(a) to FIG. 7(c) are a diagram of an example of an interface of application multi-window display according to an embodiment of this application;
FIG. 8 is a schematic flowchart of an example of application multi-window display according to an embodiment of this application;
FIG. 9 is a schematic flowchart of another example of application multi-window display according to an embodiment of this application;
FIG. 10A and FIG. 10B are a schematic flowchart of still another example of application multi-window display according to an embodiment of this application;
FIG. 11 is a schematic flowchart of an application multi-window display method 1100 according to an embodiment of this application; and
FIG. 12 is a diagram of a structure of an electronic device according to this application.

### DESCRIPTION OF EMBODIMENTS

The following clearly and fully describes technical solutions in embodiments of this application with reference to accompanying drawings in embodiments of this application.

Terms used in the following embodiments are merely intended to describe specific embodiments, but are not intended to limit this application. The terms "one", "a", "the foregoing", "this", and "the one" of singular forms used in this specification and the appended claims of this application are also intended to include forms such as "one or more", unless otherwise specified in the context clearly. It should be further understood that, in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects.

Reference to "an embodiment", "some embodiments", or the like described in this specification means that one or more embodiments of this application include a specific feature, structure, or characteristic described with reference to the embodiment. Therefore, the statements "in an embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "contain", "have", and variants of the terms all mean "include but are not limited to", unless otherwise specifically emphasized in another manner.

"A plurality of" in embodiments of this application means two or more. It should be noted that, in descriptions of embodiments of this application, terms such as "first" and "second" are used merely for distinguishing between descriptions, but should not be understood as an indication or implication of relative importance, or should not be understood as an indication of implication of a sequence.

With continuous development of smart terminals, devices such as mobile phones, tablet computers, PCs, and vehicle-mounted displays are widely used in scenarios such as home entertainment and office learning. Accordingly, consumers impose increasingly high requirements on multi-task and multi-window processing capabilities of smart terminal devices. To improve user experience of multi-task parallel processing, currently, a floating window of a terminal device may support a free-size change. When a user drags the floating window to be in a landscape window size, display in the floating window in an app multiplier mode may be implemented.

The app multiplier mode extends a display framework based on an activity (a component), that may also be referred to as an activity, in an application, to implement independent and separate display of the activity. In this way, activities in the application can be displayed at different locations on a screen. The app multiplier mode may be understood as an in-app split-screen function. To be specific, in a landscape display state, different interface information of an application may be simultaneously displayed in a left window and a right window, to fully utilize a large-screen feature of a tablet. Based on different requirements of the user, the app multiplier mode may include a navigation bar mode, a shopping mode, a custom mode, and the like. The navigation bar mode means that an application main interface is always kept on the left, and new content tapped on the left is displayed in the right window. An application using this mode is generally an instant messaging application. The shopping mode means that, to help the user compare commodities, the screen always displays two latest windows of an application, where a latest window is on the right, and a second latest window is on the left. An application using this mode is generally a shopping application. The custom mode supports a developer in customizing a window display mode. The developer may use full-screen or split-screen display based on a service scenario. The developer needs only to integrate a UIKit development framework, and may support some video playing applications and the like through configuration.

It should be understood that the app multiplier mode is different from a conventional split-screen function. A split screen additionally displays only an interface, but an app multiplier displays an application interface in a split-screen mode.

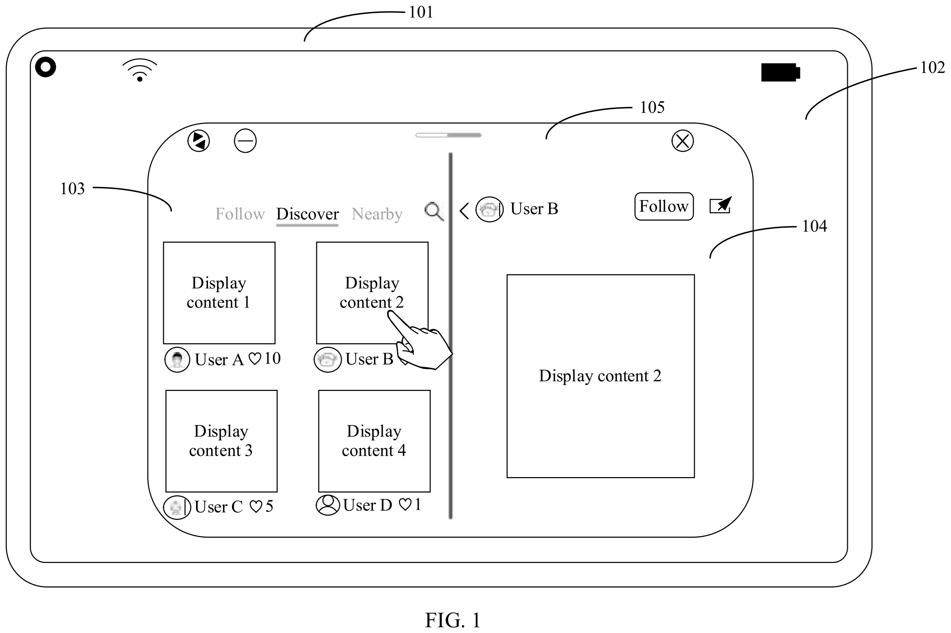

For example, FIG. 1 is a diagram of an example of a display style of an app multiplier display mode. As shown in FIG. 1, a floating window 105 of an application is displayed on a display 102 of a tablet computer 101, and two windows are displayed in the floating window 105: a window 103 and a window 104. To be specific, display content in the window 103 and display content in the window 104 are from a same application, and display interfaces of the same application may be simultaneously displayed in a left window and a right window in the app multiplier mode.

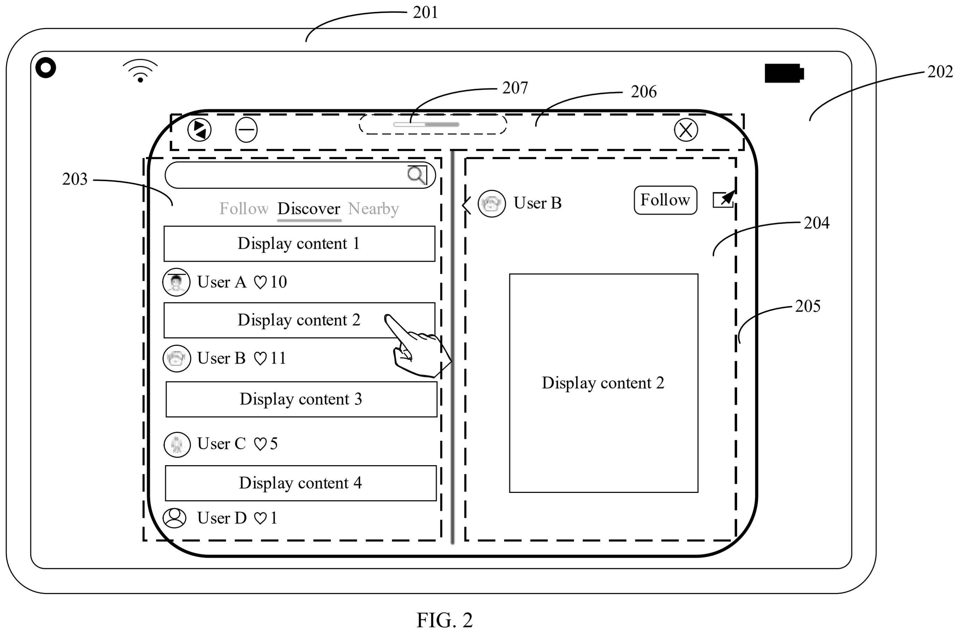

For another example, FIG. 2 is a diagram of another example of the display style of the app multiplier display mode. As shown in FIG. 2, a floating window 205 of another application is displayed on a display 202 of a tablet computer 201, and two windows are displayed in the floating window 205: a window 203 and a window 204. The floating window 205 may be understood as an application task stack. The window 203 in the floating window 205 corresponds to an activity of an application, and the window 204 corresponds to an activity. The floating window 205 further includes a title bar 206. The title bar is formed by splicing title bars of the window 203 and the window 204. The title bar 206 includes a scale-up button and a scale-down button on the left and a close button on the right. A drag button 207 is displayed at a middle location of the entire application task stack. A location of the floating window may be changed by tapping the drag button 207.

It can be learned from the display interfaces shown in FIG. 1 and FIG. 2 that, to display a plurality of windows in a floating window in the app multiplier mode, at least two activities are required. However, when an application is started for the first time, there is generally only one activity. In this case, the app multiplier mode cannot be enabled, and the app multiplier mode can be enabled only after an activity is started. In this case, the user does not know in which case the app multiplier mode can be enabled by tapping content in the application. Therefore, a system side of an electronic device may add an empty activity to an application that supports the app multiplier. When the user starts the application for the first time, the system side starts the empty activity. After there are two activities, the application may directly enter a floating window app multiplier state.

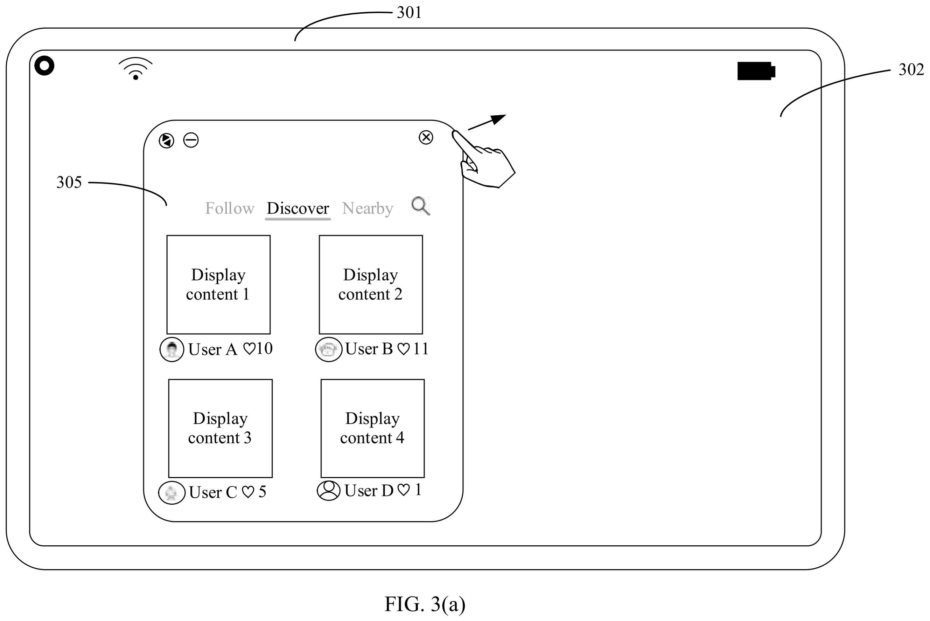

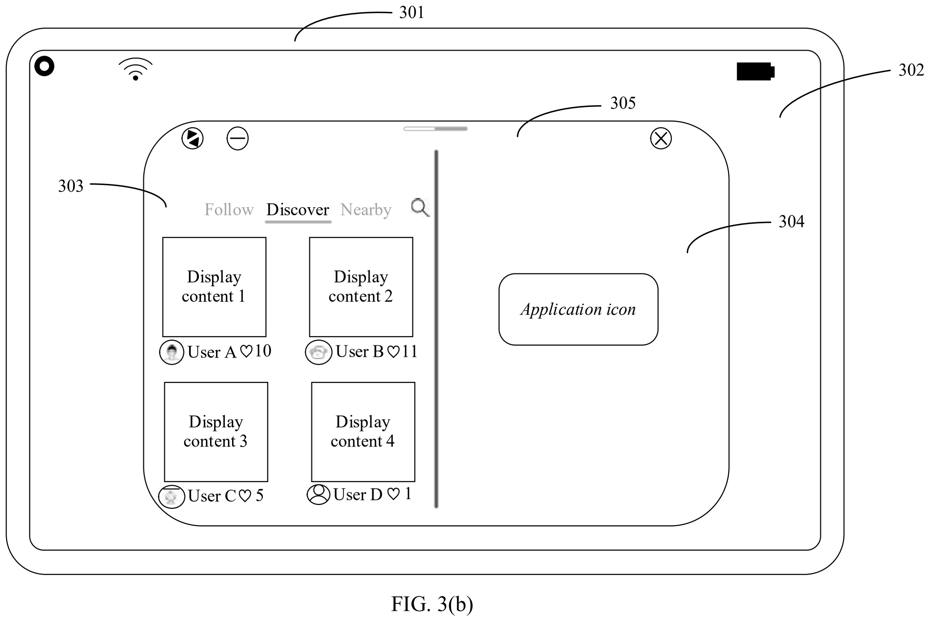

For example, FIG. 3(a) and FIG. 3(b) are a diagram of an example of an interface of an application that is started for the first time. As shown in FIG. 3(a), a floating window 305 of an application is displayed on a display 302 of a tablet computer 301, and the floating window 305 may support a free-size change. When the application supports the app multiplier mode, the user may change a size of the floating window 305 by dragging the floating window 305. When the size of the floating window 305 is changed to a landscape size, the app multiplier mode is enabled. After the app multiplier mode is enabled, as shown in FIG. 3(b), two windows are displayed in the floating window 305: a window 303 and a window 304.

It can be learned that, when the application is started for the first time, there is generally only one activity, and the user does not know whether the app multiplier can be enabled after the size of the floating window is changed. Therefore, the system side of the electronic device may add an empty activity to the application. When the user starts the application for the first time, the system side starts the empty activity. In other words, when the user starts the application for the first time, as shown in FIG. 3(b), the system side starts the empty activity, to remind the user that the application supports the app multiplier mode.

Therefore, to display, by the electronic device, the plurality of windows in the floating window in the app multiplier mode, in addition to the activity started when the application is started for the first time, the system side of the electronic device further needs to start another empty activity, to support the floating window app multiplier state of the application.

The following uses an Android (Android) operating system as an example to describe a startup process of an activity in detail.

Generally, all components in a same application are run in a same process. However, configuration may alternatively be performed in a manifest file if it is desired to control a specific component to belong to a process. Each component element (for example, an activity) in the manifest file supports an attribute "android:process" (Android:process). The attribute may be used to specify a process in which a component is run. To be specific, through setting of the attribute, each component may be run in a process of the component, some components may share one process, or components in different applications may be run in a same process.

It should be understood that each application corresponds to one manifest file. The file describes basic information and a function of the application, for example, a name, an icon, a version number, a component, and permission of the application. In addition, the manifest file includes information that ensures compatibility of the application with another application and a system component, security, and stability.

It should be further understood that the android:process is generally used to start a plurality of processes for an application, that is, to determine a running process name for a component in the application. Each component defines a process name of the component by setting a process attribute of the component. By default, Android creates a process for the application. When a first component of the application is run, all components are run in a same process. A name of the process may be the same as a package (package) name in the manifest file.

All activities in the application need to be declared in a manifest.xml file of the application. The manifest.xml file includes an activity tag and an application (application) tag. Therefore, the declaration can specify the startup process of the activity by configuring the android:process in the activity tag or by configuring the android:process in the application tag.

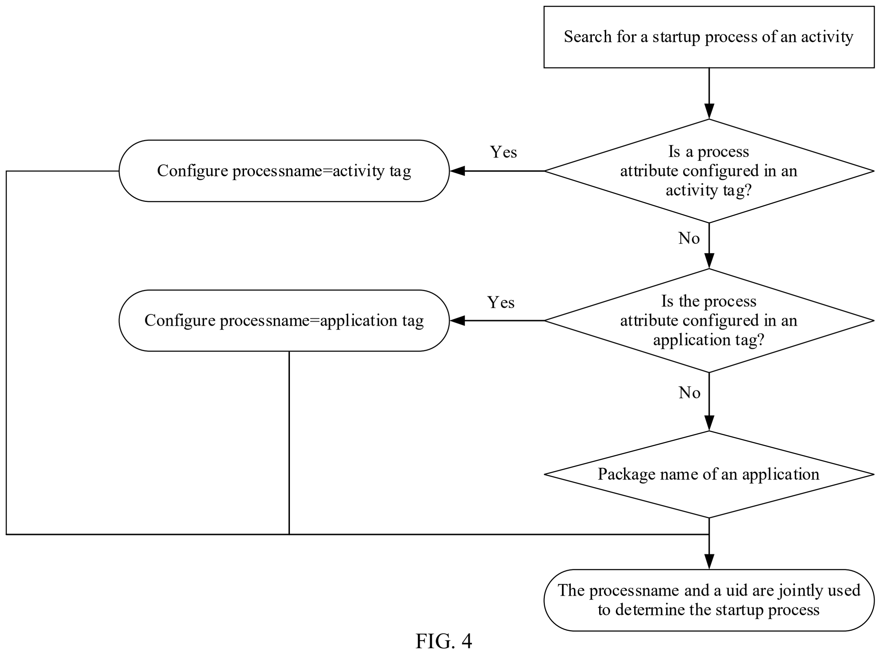

For example, FIG. 4 is a logic diagram of searching for a startup process of an activity in an Android operating system. As shown in FIG. 4, it is first checked, in an activity tag, whether a process attribute is configured. If the process attribute is configured in the activity tag, a processname is a name configured in the activity tag. If the corresponding configured field is not found in the activity tag, it is checked, in an application tag, whether the field is configured. If the process attribute is configured in the application tag, the processname is a name configured in the application tag. If the process attribute is configured in neither of the activity tag and the application tag, the processName is a package name of an application.

After the processname is determined, the processname and a unique identifier (unique identifier, UID) are jointly used to search a currently existing process list for a matching process. If the matching process is found, the activity is started in the process, thereby reducing resource usage. If no matching process is found, a new process is created. The uid is allocated by the system, which is generally a uid of an application in which the activity is.

Similarly, in an app multiplier mode, when the system creates an empty activity, a startup process of the activity is as described above. To be specific, the empty activity can be declared only in a manifest file of the system. When no process attribute is specified, the process runs in a corresponding system process instead of running in a process of the application. If the process of the empty activity runs in the system process, the following two problems are caused. 1. System memory is occupied, affecting performance and power consumption. 2. Dual windows in a floating window correspond to two activities: one activity that is from the application and run in the process of the application and one activity that is from the system and run in the system process. If the activity of the application and the activity of the system are not in a same process, cross-process activity communication is difficult, and it cannot be ensured that lifecycles of the two display windows cannot be simultaneously managed. In this case, when a user performs an operation on one side of a screen, content on another side is quite likely to be affected. Consequently, many synchronization functions cannot be implemented.

For example, still with reference to FIG. 2, as shown in FIG. 2, if the activity corresponding to the window 203 and the activity corresponding to the window 204 are not in a same process, when the user taps the title bar of the left window, a dragbar of the right window cannot be highlighted, and dragbars of the left window and the right window cannot be simultaneously focused or defocused. In this case, the user is confused about two focusing statuses in a same application, affecting user experience.

In conclusion, because an android:process field in an activity tag and an application tag is a static field, the android:process field cannot dynamically adapt to all third-party applications. Therefore, a process of an activity added by the system cannot run in a corresponding application. In this case, how to modify a startup process of the activity added by the system so that the activity added by the system can adapt to any third-party application is a problem that needs to be resolved currently.

In view of this, this application provides an application multi-window display method. The method includes: An activity object is created based on a startup request of an activity of a system, the system side of an electronic device determines both a processName and a uid of a third-party application that need to be changed, and stores the processName and the uid of the third-party application in the created activity object, and the electronic device determines, based on the stored processName and uid, whether a running process exists, and starts the activity of the system in the process if the running process exists, or creates a new process if no running process exists. The method can enable a plurality of windows of the application to be run in a process of the application, thereby ensuring simultaneous management of the plurality of display windows by the electronic device, without occupying system memory.

Before the application multi-window display method provided in this application is described, an electronic device provided in this application is first described in detail. An embodiment of this application provides an electronic device. The electronic device is configured to perform the application multi-window display method provided in this application. For example, the electronic device in this embodiment of this application may be a personal computer, various portable notebooks, various tablet computers, a mobile phone, a head unit, or the like. Optionally, the electronic device may alternatively be a personal digital assistant (personal digital assistant, PDA), a handheld device having a large display, a computing device, a vehicle-mounted device, a wearable device, an electronic device in a 5G network, an electronic device in an evolved public land mobile network (public land mobile network, PLMN), or the like. This is not limited in embodiments of this application.

The electronic device mentioned above may have a single screen, a foldable screen, a curved screen, or the like. The foldable screen may be a structure physically having two screens, or may be a structure physically having one screen. This is not specifically limited herein. An electronic device physically having two screens may include a primary screen and a secondary screen, which serve as a left window and a right window of the electronic device respectively. In this embodiment of this application, the application multi-window display method provided in this application may also be applied to an electronic device having at least three screens. This is not specifically limited herein.

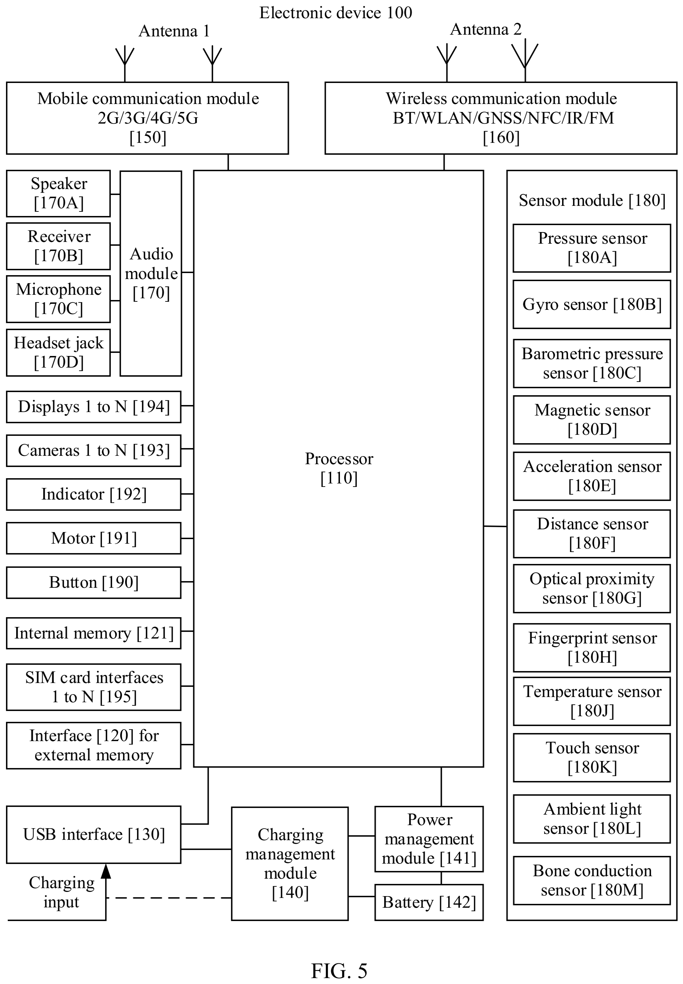

For example, FIG. 5 is a diagram of an example of a structure of an electronic device 100 according to this application. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

In this embodiment of this application, the processor 110 may receive an instruction of starting an application by a user. For example, after the user performs a startup operation on the application, the display may implement split-screen display, to be specific, display a first window and a second window on the display in a landscape mode. In addition, the processor 110 runs, in a process of a third-party application based on the operation of the user, an activity created by a system, to ensure that the two display windows can be simultaneously managed, thereby improving user experience.

The controller may be a nerve center and a command center of the electronic device 100. The controller may generate an operation control signal based on an instruction operation code and a time sequence signal, to complete control of instruction fetching and instruction execution.

The memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces a waiting time of the processor 110, thereby improving system efficiency.

The memory is configured to store application code for executing solutions of this application, and the processor 110 controls the execution. The processor 110 is configured to execute the application code stored in the memory, to control the electronic device 100 to implement the application multi-window display method provided in embodiments of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identity module, SIM) interface, a universal serial bus (universal serial bus, USB) interface, and/or the like.

It may be understood that an interface connection relationship between the modules illustrated in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to an electronic device through the power management module 141.

A wireless communication function of the electronic device 100 may be implemented through the antenna 1, the antenna 2, the mobile communication module 150, the wireless communication module 160, the modem processor, the baseband processor, and the like.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

In this embodiment of this application, the display 194 may be configured to display a floating window. The floating window includes a plurality of windows that are respectively a window corresponding to an activity started by the application and a window corresponding to the activity created by the system.

The electronic device 100 may implement an image shooting function through the ISP, the camera 193, the video codec, the GPU, the display 194, the application processor, and the like.

The interface 120 for external memory may be configured to connect to an external memory card, for example, a micro SD card, to extend a storage capability of the electronic device 100. The external memory card communicates with the processor 110 through the interface 120 for external memory, to implement a data storage function. For example, files such as music and a video are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data and a phone book) created during use of the electronic device 100, and the like. In addition, the internal memory 121 may include a high-speed random access memory, and may further include a non-volatile memory, for example, at least one magnetic disk storage device, a flash memory device, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The touch sensor 180K is also referred to as a "touch panel". The touch sensor 180K may be disposed on the display 194, and the touch sensor 180K and the display 194 form a touchscreen that is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided through the display 194. In some other embodiments, the touch sensor 180K may alternatively be disposed on a surface of the electronic device 100 at a location different from that of the display 194.

For example, in this embodiment of this application, an operation of starting the application by the user may be obtained through the touch sensor 180K. After receiving the operation of starting the application by the user, the processor 110 starts, in response to the operation, the activity created by the system in the process of the third-party application.

The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like. The SIM card interface 195 is configured to connect to a SIM card. It may be understood that the structure shown in this embodiment of this application does not constitute a specific limitation on the electronic device 100. In some other embodiments of this application, the electronic device 100 may include more or fewer components than those shown in the figure, or combine some of the components, or split some of the components, or have different arrangements of the components. The components shown in the figure may be implemented by hardware, software, or a combination of software and hardware.

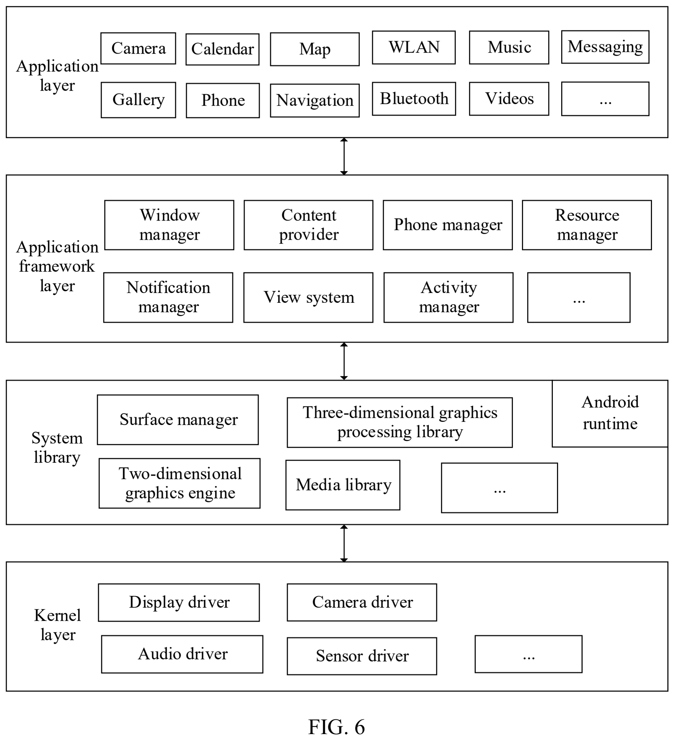

FIG. 6 is a block diagram of a software structure of the electronic device 100 according to an embodiment of this application. In a layered architecture, software is divided into several layers, and each layer has a clear role and task. The layers communicate with each other through a software interface. In some embodiments, an Android system is divided into four layers from top to bottom: an application layer, an application framework layer, an Android runtime (Android runtime) and system library, and a kernel layer.

As shown in FIG. 6, an application package may include applications such as Camera, Gallery, Calendar, Phone, Map, Navigation, WLAN, Bluetooth, Music, Videos, and Messaging.

The application framework layer provides an application programming interface (application programming interface, API) and a programming framework for the application at the application layer. The application framework layer includes some predefined functions. As shown in FIG. 6, the application framework layer may include a window manager, a content provider, a view system, a phone manager, a resource manager, a notification manager, a layout manager, an activity manager, and the like.

The window manager is used to manage a window program. The window manager may obtain a size of the display, determine whether there is a status bar, lock a screen, take a screenshot, and the like.

The content provider is used to store and obtain data, and enable the data to be accessible by the application.

The view system includes a visual control like a text display control or an image display control. The view system may be used to construct an application. A display interface may include one or more views.

The phone manager is used to provide a communication function of the electronic device 100, for example, management of a call status (including answering or declining).

The resource manager provides various resources such as a localized character string, an icon, a picture, a layout file, and a video file for the application.

The notification manager enables the application to display notification information in a status bar, may be used to convey a notification message, and may automatically disappear after a short pause without user interaction. For example, the notification manager is used to notify download completion and provide a message notification. The notification manager may alternatively be a notification that appears in a top status bar of the system in a form of a graph or a scroll bar text, for example, a notification of an application that runs in a background, or may be a notification that appears on a screen in a form of a dialog window. For example, text information is prompted in the status bar, an alert tone is made, the electronic device vibrates, or an indicator light blinks.

The layout manager is used to sequentially arrange views including components based on a layout requirement, to form the display interface.

The activity manager is used to manage lifecycles of the applications and a navigation back function, and is responsible for creation of a main thread of Android and maintenance of the lifecycles of the applications.

For example, in this embodiment of this application, the activity manager is used to start the activity created by the system, create an activityrecord (an activity object) based on a requested parameter, store, in the activityrecord, a processname (process name) and a uid (unique identifier) that are parsed by the system side, and then initializes a startup parameter. The activity manager is further used to search an activity stack manager for a corresponding startup stack based on the processname and the uid. Then, the activity stack manager in the activity manager searches a currently existing process list for a matching process based on the processname and the uid that are stored in the activityrecord, and starts, in the process if the matching process is found, the activity created by the system, or creates, if no matching process is found, a new process based on the processname and the uid, and then starts, in the new process, the activity created by the system.

The Android runtime includes a core library and a virtual machine. The Android runtime is responsible for scheduling and management of the Android system.

The core library includes two parts: a function that needs to be invoked in a java language, and a core library of Android.

The application layer and the application framework layer run on the virtual machine. The virtual machine executes java files at the application layer and the application framework layer as binary files. The virtual machine is used to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video coding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between the hardware and the software. The kernel layer includes at least a display driver, a camera driver, an audio driver, and a sensor driver.

With reference to an app multiplier scenario, the following describes an example of a working procedure of the software and the hardware of the electronic device 100.

When the touch sensor 180K receives a touch operation, a corresponding hardware is triggered to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-finger touch tap operation, and a control corresponding to the tap operation is a split-screen control. When it is determined, based on the touch operation of the user, that the touch event is to start an application in an app multiplier mode, a split-screen application invokes an interface at the application framework layer to start the split-screen application, and then invokes the kernel layer to start the display driver, to implement presentation of the app multiplier mode through the display driver, namely, split-screen display of the display.

It may be understood that the structure shown in this embodiment of this application does not constitute a specific limitation on the electronic device 100. In some other embodiments of this application, the electronic device 100 may include more or fewer components than those shown in the figure, or combine some of the components, or split some of the components, or have different arrangements of the components. The components shown in the figure may be implemented by hardware, software, or a combination of software and hardware.

For ease of understanding, in the following embodiments of this application, the electronic device having the structures shown in FIG. 5 and FIG. 6 is used as an example to describe in detail, with reference to accompanying drawings and an application scenario, the application multi-window display method provided in embodiments of this application.

Before the application multi-window display method provided in this application is described, the following first describes an application scenario to which the method is applicable.

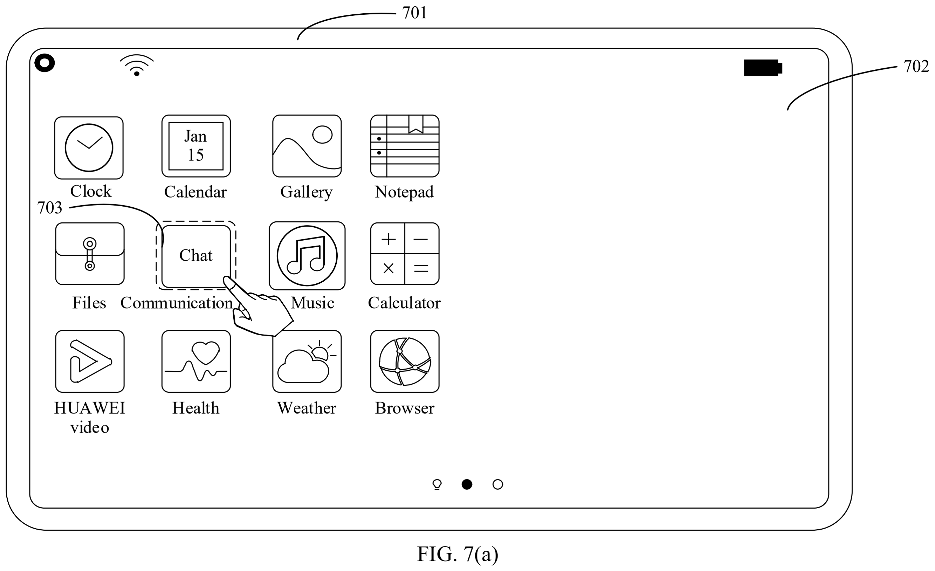

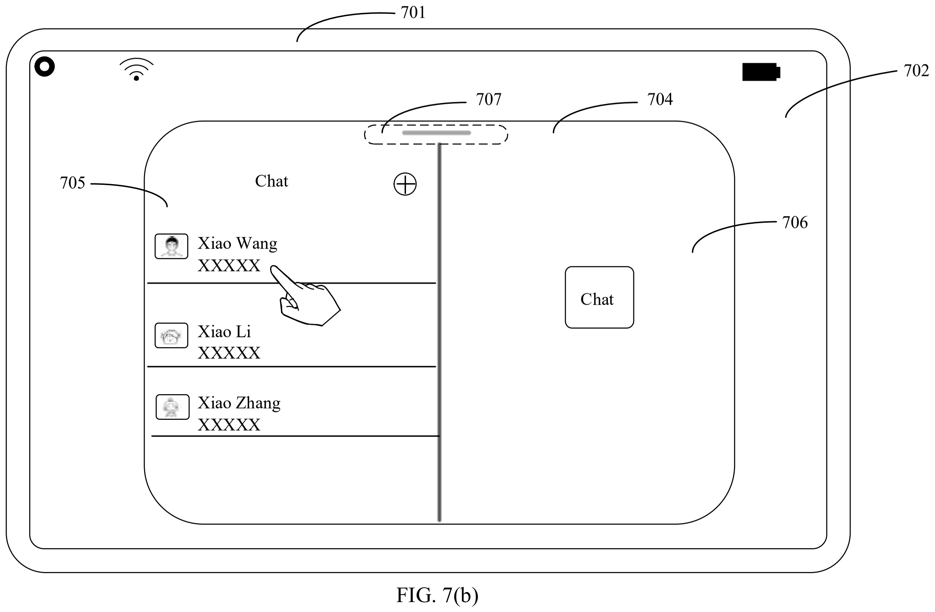

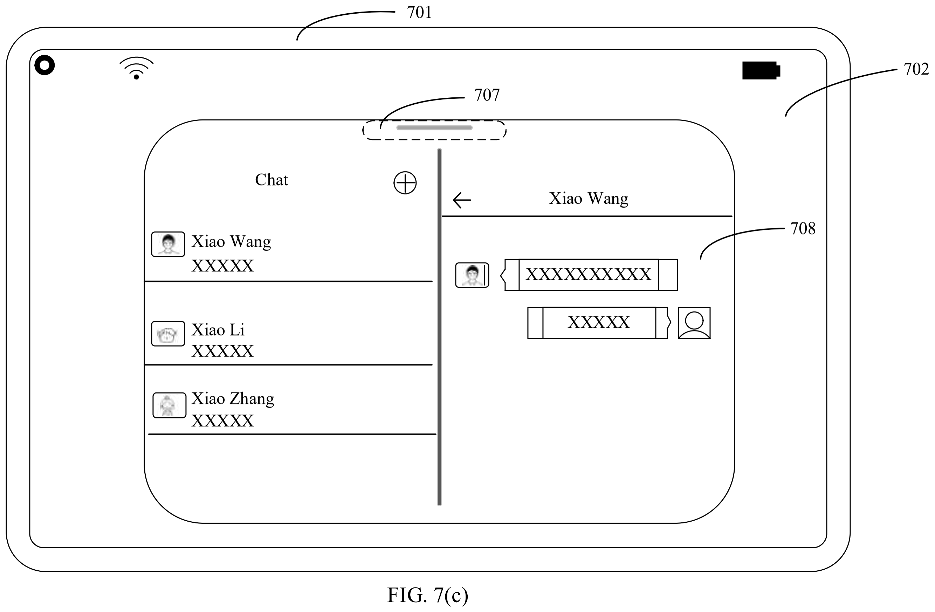

For example, FIG. 7(a) to FIG. 7(c) are a diagram of an example of an interface of application multi-window display according to an embodiment of this application. As shown in FIG. 7(a), a plurality of applications are displayed on a display 702 of a tablet computer 701. When a user taps a chat application 703, the chat application 703 starts an activity of the application in response to the start operation of the user, and a system of an electronic device starts an empty activity. A display interface of the tablet computer is switched from an interface shown in FIG. 7(a) to an interface shown in FIG. 7(b). As shown in the interface shown in FIG. 7(b), a floating window 704 corresponding to the chat application 703 is displayed on the display 702. The floating window 704 includes a display window 705 and a display window 706. The display window 705 corresponds to the activity started by the chat application, and is used to display a main interface of the chat application. The display window 706 corresponds to the activity started by the system, and is used to display an application icon of the chat application, indicating that the chat application supports an app multiplier mode. When the user taps a dialog box with Xiao Wang in the interface shown in FIG. 7(b), the display interface of the tablet computer is switched from the interface shown in FIG. 7(b) to an interface shown in FIG. 7(c). As shown in FIG. 7(c), the application main interface is always kept in the left display window 705, and new content tapped on the left is displayed in the right display window 706, to be specific, the right display window is switched from the display window 706 to a display window 708. It can be further learned from FIG. 7(b) and FIG. 7(c) that, after a floating window app multiplier is enabled, both sides of a dragbar control 707 at an upper part of the display interface are highlighted, indicating that the display window 705 and the display window 706 are in a same process or the display window 705 and the display window 708 are in a same process, and are in a focused state. This provides unified experience for the user, thereby improving user experience.

It should be understood that the system of the electronic device mentioned in this embodiment of this application may include but is not limited to operating systems such as Harmony (Harmony), Symbian (Symbian)^{®}, Windows^{®}, Apple (iOS)^{®}, Blackberry (Blackberry)^{®}, and Android^{®}. For example, a function related to creation of the activity may be enabled through an interface created by the system of the electronic device. For example, the activity may be created through the interface created by the system of the electronic device. For another example, a processname and a uid of the activity are determined through the interface created by the system of the electronic device. The interface created by the system may be an app multiplier service interface.

It should be noted that the example in FIG. 7(a) to FIG. 7(c) is described by using a navigation bar mode in the app multiplier mode as an example, but does not constitute a limitation on a use scenario of the application multi-window display method provided in this application. The application multi-window display method provided in this application is further applicable to another mode of the app multiplier mode, for example, a shopping mode and a custom mode. Examples are not enumerated for description herein.

It should be further noted that, in the foregoing example, a display manner of the electronic device is split-screen display of the electronic device in a landscape state, and may alternatively be split-screen display in a portrait state in another embodiment of this application. A display status of the electronic device is not specifically limited in embodiments of this application.

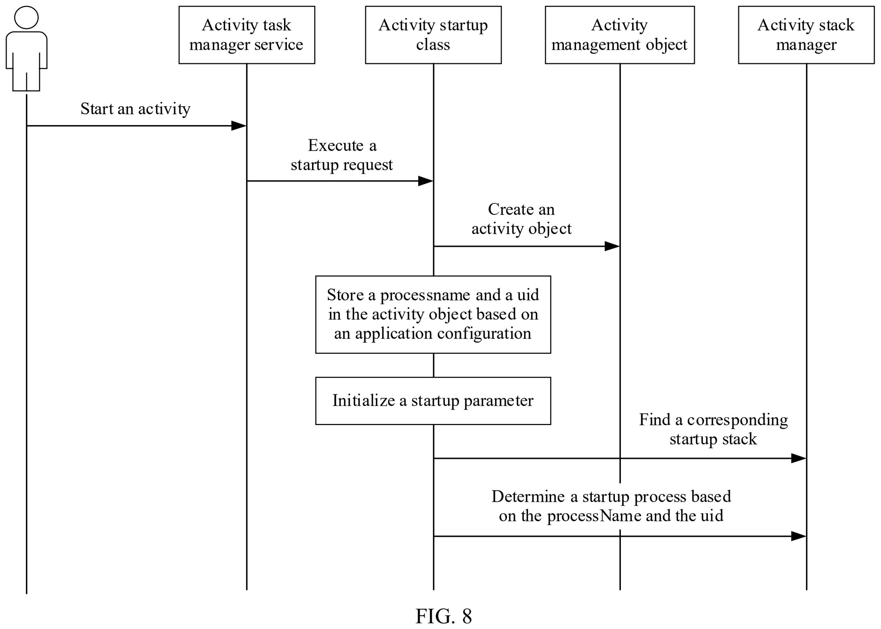

With reference to FIG. 8, the following describes in detail how the display window 705 and the display window 706 are in a same application process in the scenario shown in FIG. 7(a) to FIG. 7(c).

FIG. 8 is a schematic flowchart of an example of application multi-window display according to an embodiment of this application. As shown in FIG. 8, after a user taps an icon of an application, in response to the operation of starting the application, an activity task manager service of an electronic device sends an activity startup request to an activitystarter (an activity startup class). After receiving the request for starting an activity, the activitystarter creates a corresponding activityrecord based on a requested parameter. It should be understood that one activityrecord corresponds to one activity, and the activityrecord stores all information of the activity. The activity task manager service may also be referred to as an activity manager.

It should be understood that the activitystarter is a newly added class in an Android operating system, and is mainly responsible for starting the activity. The activitystarter is mainly responsible for processing the activity startup request, including parsing an intent, selecting an appropriate activity, processing permission, and the like; processing various parameters such as flags, options, and lauchBounds when the activity is started; managing a status like waiting for startup, being started, and started when the activity is started; and monitoring a status change like startup success, a startup failure, and cancellation when the activity is started. In conclusion, a function of the activitystarter is to make an activity startup procedure more flexible, controllable, and extensible.

The system side of the electronic device parses an application configuration, and determines a processname and a uid of the activity added by the system. For example, in the example shown in FIG. 7(a) to FIG. 7(c), the processName and the uid of the activity added by the system may be a processName and a uid of the chat application. The activitystarter stores the determined processname and uid in the activityrecord. Then, the activitystarter searches an activity stack manager for a corresponding startup stack. The activity stack manager searches, based on the processname and the uid, a plurality of process lists for a process that matches the processName and the uid, and starts the activity in the process if the matching process is found, or starts a new process if no matching process is found. For example, when the list of processes running in the activity stack manager includes the processname and the uid of the chat application, the activity is directly started in the process. If the list of processes running in the activity stack manager does not include the processname and the uid of the chat application, a new process is created based on the processname and the uid, and then the activity created by the system is started in the created new process.

It should be understood that the activity stack manager is used to manage a task stack, and one task stack includes one or more activityrecords. Therefore, the activity stack manager includes a plurality of running task stacks. To reduce resource usage, when starting an activity process, the activitystarter can first search the activity stack manager for a running matching process, and start the activity process in the process if the running matching process is found, or start a new process if no running matching process is found.

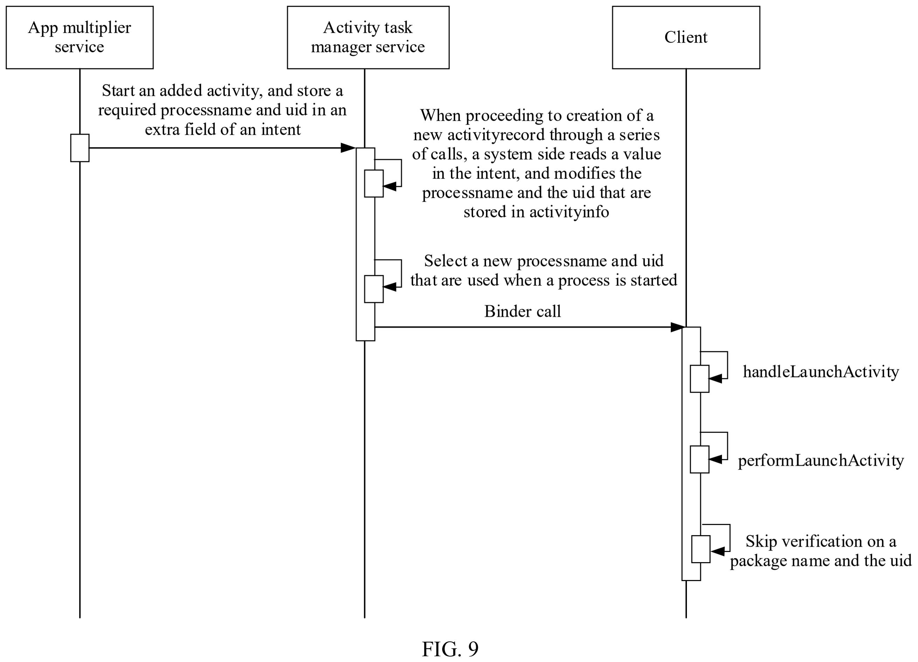

In some embodiments, FIG. 9 is a schematic flowchart of another example of application multi-window display according to an embodiment of this application. As shown in FIG. 9, a system side of an electronic device starts, through an app multiplier service interface, an activity added by the system side, and after determining a processname and a uid, may store the processname and the uid of an application in an extra field of an intent. When proceeding to creation of an activityrecord by an activitystarter through a series of calls, the system side of the electronic device reads a value stored in the extra field of the intent, and then stores the read processname and uid in an activityrecord newly created by an activity task manager service. When selecting a startup process, the activity task manager service uses a new processname and uid. A client (a client of the application) invokes a handleLaunchActivity to start the activity, invokes a performLaunchActivity to wake up the activity, and then skips verification on a package name and a uid of the activity, to successfully display a display window corresponding to the activity.

For example, as shown in FIG. 7(a) to FIG. 7(c), after determining that the processname and the uid are the processname and the uid of the chat application, a system stores the processname and the uid of the chat application in the extra field of the intent, and when the activitystarter creates the activityrecord, reads the processname and the uid of the chat application that are stored in the extra field of the intent. In this case, when selecting the startup process, the activity task manager service starts the process based on the processname and the uid of the chat application.

It should be understood that the system side of the electronic device transfers the intent to the activitystarter, and after receiving the intent, the activitystarter may start a new activity instance. The intent describes the to-be-started activity, and carries necessary data.

It should be noted that, when the activity added by the system is run in a third-party application, an interface corresponding to the activity needs to be loaded in a display interface of the third-party application. However, function implementation code of various components in the activity is all on the system side. Therefore, in this embodiment of this application, the activity added by the system needs to be placed in a jar package that is of the system and that is loaded when the application is started. If the activity added by the system is not placed in the jar package that is of the system and that is loaded when the application is started, the activity cannot be found, and a classNotFound prompt is given. As a result, the interface corresponding to the activity cannot be normally displayed. The jar package that is of the system and that is loaded when the application is started may be framework.jar, hwEmui.jar, or the like.

For example, in the example shown in FIG. 7(a) to FIG. 7(c), when the activity added by the system is run in the chat application, the chat application needs to load the interface (namely, an interface shown in the display window 708) corresponding to the activity. However, function implementation code of components in the display window 708 is all on the system side. When being started, the chat application loads the jar package of the system. Therefore, the activity added by the system may be placed in the jar package that is of the system and that is loaded when the chat application is started. In this way, the function implementation code on the system side can be successfully invoked for running on a chat application side.

It should be further noted that, based on the implementation flowcharts shown in FIG. 8 and FIG. 9, to enable the activity added by the system to be run in an application process, the processname and the uid of the activity added by the system are changed to a processname and a uid of the application. However, the package name of the activity added by the system is still a system package name, and an exception may occur when the application performs verification. To resolve this problem, a special verification manner may be newly added to the client of the application, to be specific, the activity added by the system can meet security verification, or the verification on the package name and the uid of the activity added by the system can be skipped, and the security verification can also be met.

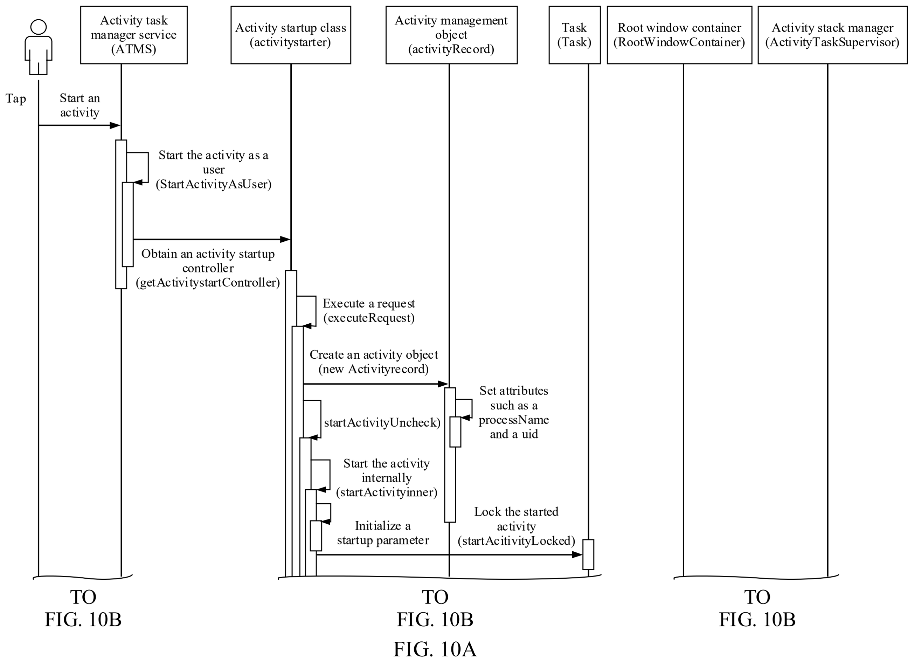

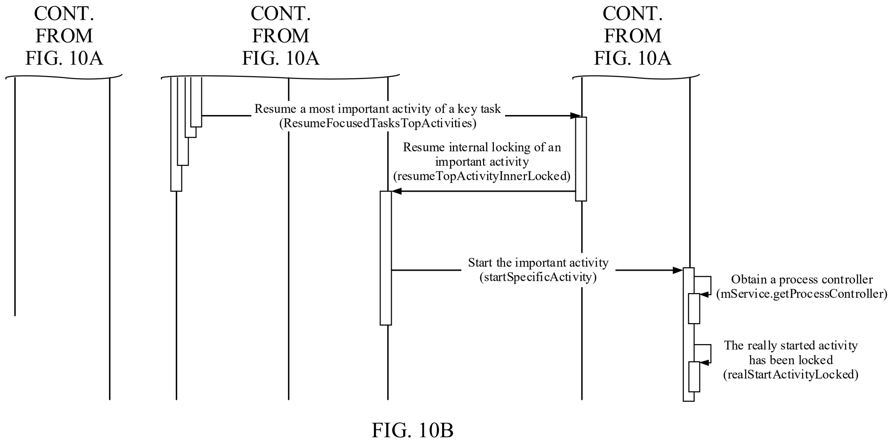

FIG. 10A and FIG. 10B are a schematic flowchart of still another example of application multi-window display according to an embodiment of this application. As shown in FIG. 10A and FIG. 10B, after a user taps an application, an activity task manager service (ATMS) starts an activity as the user. The ATMS sends a getActivitystartController instruction to an activity startup class. An activitystarter executes a request according to the instruction, and creates an activity object. Then the activitystarter starts the activity internally and initializes a startup parameter. The activitystarter stores, in the created activity object, a processname and a uid that are parsed by a system side. The activitystarter sends a startAcitivityLocked instruction to a task, and sends a ResumeFocusedTasksTopActivities instruction to a RootWindowContainer. The RootWindowContainer sends a resumeTopActivityInner Locked instruction to the task. After the task sends a startSpecificActivity instruction to an activity stack manager, the activity stack manager obtains a process controller and locks a started service based on the processname and the uid of the application.

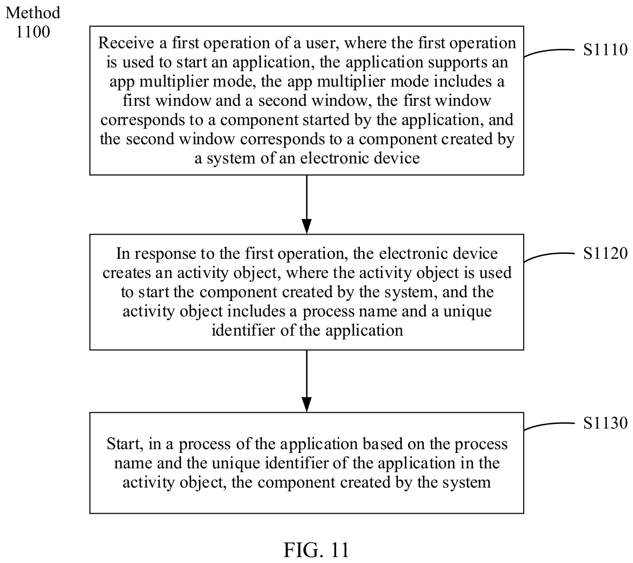

With reference to the scenario diagram in FIG. 7(a) to FIG. 7(c), the following describes the application multi-window display method provided in embodiments of this application. FIG. 11 is a schematic flowchart of an application multi-window display method 1100 according to an embodiment of this application. As shown in FIG. 11, the method 1100 shown in FIG. 11 may include step S1110 to step S1130. With reference to FIG. 11, the following describes in detail the steps in the method 1100.

It should be understood that, in this embodiment of this application, an example in which an electronic device is used as an execution body that executes the method 1100 is used to describe the method 1100. By way of example and not limitation, the execution body that executes the method 1100 may alternatively be a chip used in the electronic device.

S1110: Receive a first operation of a user, where the first operation is used to start an application, the application supports an app multiplier mode, the app multiplier mode includes a first window and a second window, the first window corresponds to an activity started by the application, and the second window corresponds to an activity created by a system of the electronic device.

It should be noted that the application in this embodiment of this application is application software. The application may be a system application or a third-party application running on a terminal. For example, a first application may be application software built in the system, or may be application software (a social application, a shopping application, or the like) downloaded and installed by the user. This is not limited in this application.

It should be further noted that the application in this application may be a world wide web (world wide web, Web) application, or may be a native application. The Web application is a web page application running in a browser. The native application is an application that can directly run on a current operating system. The Web application includes but is not limited to a ticket purchasing application, a message board, and a forum that run in the browser. The native application includes but is not limited to a music application, a shopping application, a graphics editing application, and a sports application.

In step S1110, the first operation of the user may be an operation of starting the application by the user, and the application supports the app multiplier mode.

For example, with reference to FIG. 7(a) to FIG. 7(c), the first operation of the user received by the electronic device is the operation of starting the chat application by the user. The chat application supports the app multiplier mode. Therefore, when the user starts the chat application for the first time, the application includes the first window (the display window 705) and the second window (the display window 706). In addition, the display window 705 corresponds to the activity started by the chat application, and the display window 706 corresponds to the activity created by the system. In this embodiment of this application, the activity corresponding to the display window 706 needs to be started in a process started by the chat application.

S1120: In response to the first operation, the electronic device creates an activity object and starts the activity created by the system, where the activity object includes a processname and a uid of the application.

In this embodiment of this application, because the activity corresponding to the second window is created by the system, when the activity created by the system is started, an activityrecord corresponding to the activity is created. To enable the activity created by the system to be run in the corresponding application, the activity object includes the processname and the uid of the application.

For example, as shown in FIG. 7(b), in response to the first operation, the electronic device creates the activityrecord. The activityrecord is used to start the activity (the activity corresponding to the display window 706) created by the system. To enable the activity corresponding to the display window 706 to be started in the process of the chat application, the created activityrecord should include the processname and the uid of the chat application.

S1130: Start, in a process of the application based on the processname and the uid of the application in the activity object, the activity created by the system.

In step S1030, because the activity object includes the processname and the uid of the application, in a procedure of starting the activity, an activity stack management server can start, in the process of the application based on the processname and the uid, the activity created by the system.

For example, as shown in FIG. 7(b), the activityrecord used to start the activity created by the system includes the processname and the uid of the chat application. Therefore, the activity corresponding to the display window 706 can be started in the chat application.

According to the application multi-window display method provided in this application, after the app multiplier mode of the application is enabled based on the first operation of the user, the corresponding activity object is created for the activity newly added by the system. The activity object includes the processname and the uid of the application. Therefore, the activity newly added by the system is started in the process of the application based on the processname and the uid of the application in the activity object, ensuring that both the activities corresponding to the first window and the second window are started in a same process. This ensures that the two display windows can be simultaneously managed, thereby improving user experience.

In some possible implementations, before the electronic device creates the activity object, the method further includes: The system of the electronic device determines the processname and the uid of the application based on the first operation. In this implementation, the system side of the electronic device parses the processname and the uid of the application based on the operation of starting the application by the user, so that the activity created by the system is started in the process of the application based on the processname and the uid.

In some possible implementations, the processname and the uid of the application are stored in a first field of an intent. In this implementation, the intent describes the to-be-started activity, and carries some necessary data of the started activity. Therefore, the to-be-started component can be started in the corresponding process by storing the process name and the unique identifier of the application in the first field of the intent. For example, the first field may be an extra field.

In some possible implementations, that the electronic device creates the activity object includes: The electronic device creates an empty activity object, reads the processname and the uid in the first field of the intent, and stores the processname and the uid in the empty activity object, to obtain the activity object.

In this implementation, the processname and the uid of the application need to be stored in the empty activity object, so that the activity created by the system can be started in the corresponding application. In this way, when the activity object is run in a task stack, the activity created by the system is started in the corresponding application.

In some possible implementations, starting, in the process of the application based on the processname and the uid of the application in the activity object, the activity created by the system includes: when the processname and the uid of the application in the activity object match a processname and a uid of a currently running process, starting, in the currently running process, the activity created by the system; or when the processname and the uid of the application in the activity object do not match the processname and the uid of the currently running process, creating a new process based on the processname and the uid of the application in the activity object, and starting, in the new process, the component created by the system.

In this implementation, it can be determined, based on the processname and the uid of the application in the activity object, whether the activity created by the system is run in an existing process or is run in the created new process. It should be understood that both the existing process and the created new process are processes in the application.

In some possible implementations, the activity created by the system is stored in a jar package that is of the system and that is loaded when the application is started. In this implementation, after the activity created by the system is run in the application process, when the application loads a window that needs to be displayed, a component in the window or other function logic on the activity is still implemented on the system side. Therefore, when the activity created by the system is stored in the jar package that is of the system and that is loaded when the application is started, the application can load the jar package when being started. This ensures that a window corresponding to the activity created by the system can be normally displayed.

For example, the jar package of the system may be any one of framework.jar, hwEmui.jar, and services.jar. Certainly, the jar package that is of the system and that is loaded when the application is started may alternatively be another jar package. This is not specifically limited in embodiments of this application.

For example, as shown in FIG. 7(c), after the display window 708 is run in the process of the chat application, the chat application needs to load a component corresponding to the display window 708. However, the component in the window or other function logic on the display window 708 is still implemented on the system side. Therefore, when the activity created by the system is stored in the jar package that is of the system and that is loaded when the chat application is started, the chat application can load the jar package when being started. This ensures that the display window 708 can be normally displayed.

In some possible implementations, in response to the first operation, display statuses of a drag component of the first window and a drag component of the second window are consistent. In this implementation, in response to the first operation, the activity created by the system is started in the process of the application, and the first window and the second window correspond to a same process. In this way, the display statuses of the drag component of the first window and the drag component of the second window are consistent.

For example, both the drag component of the first window and the drag component of the second window are drgbars, and that the display statuses are consistent may be understood as that both the drgbars are highlighted or grayed.

For example, compared with those in FIG. 1, FIG. 2, and FIG. 3(b), the drag components 707 shown in FIG. 7(b) and FIG. 7(c) have consistent display statuses (to be specific, both are highlighted), thereby improving user experience.

In some possible implementations, the second window is displayed on a display of the electronic device in a full-screen mode or as a floating-window.

For example, as shown in FIG. 7(b) or FIG. 7(c), the display window 706 and the display window 708 may be displayed on the display 702 of the tablet computer 701 in the full-screen or floating-window manner.

In some possible implementations, when the application is started, verification on a package name and a unique identifier of the component created by the system is skipped. In this implementation, only a process name and the unique identifier of the component created by the system are modified, and the package name of the component is still a system package name. Therefore, skipping the verification on the package name and the unique identifier of the component created by the system can ensure that the window corresponding to the component created by the system is successfully displayed when the application is started.

In some possible implementations, an operating system of the electronic device is an Android operating system.

The foregoing describes in detail the example of the application multi-window display method provided in this application. It may be understood that, to implement the foregoing functions, the electronic device includes a corresponding hardware structure and/or software module for performing the functions. Persons skilled in the art should be easily aware that, in combination with units and algorithm steps of the examples described in embodiments disclosed in this specification, this application can be implemented by hardware or a combination of the hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In this application, division into functional units may be performed on a cross-system target object drag method based on the foregoing method example. For example, each functional unit may be obtained through division based on each function, or two or more functions may be integrated into one unit. The integrated unit may be implemented in a form of hardware, or may be implemented in a form of a software functional unit. It should be noted that, in this application, division into the units is an example, is merely logical function division, and may be other division during actual implementation.

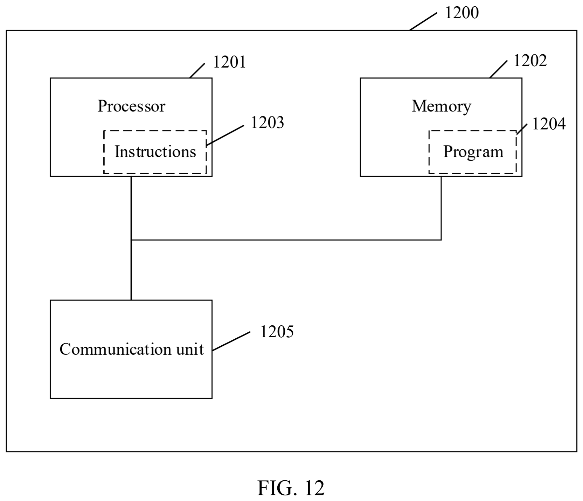

FIG. 12 is a diagram of a structure of an electronic device according to this application. A dashed line in FIG. 12 indicates that a unit or a module is optional. The electronic device 1200 may be configured to implement the method described in the foregoing method embodiments. The electronic device 1200 may be a terminal device or a server, or may be a module (for example, a processor, a chip, or a chip system) used in the terminal device or the server, or a logical node, a logical module, or software that can implement all or a part of functions of the terminal, or a logical node, a logical module, or software that can implement all or a part of functions of the server.

The electronic device 1200 includes one or more processors 1201. The one or more processors 1201 may support the electronic device 1200 in implementing the method in the method embodiment corresponding to FIG. 11. The processor 1201 may be a general-purpose processor or a dedicated processor. For example, the processor 1201 may be a central processing unit (Central Processing Unit, CPU). The CPU may be configured to: control the electronic device 1200, execute a software program, and process data of the software program. The electronic device 1200 may further include a communication unit 1205, configured to implement input (receiving) and output (sending) of signals.

The electronic device 1200 may be a chip (system). The chip (system) includes a memory and a processor. The processor is configured to execute a computer program stored in the memory, to implement the method shown in the foregoing embodiments.

The communication unit 1205 may be an input and/or output circuit of the chip (system), or the communication unit 1205 may be a communication interface of the chip (system). The chip (system) may be used as a constituent part of the electronic device 1200.

For another example, the communication unit 1205 may be a transceiver of the electronic device 1200, or the communication unit 1205 may be a transceiver circuit of the electronic device 1200.

The electronic device 1200 may include one or more memories 1202. The memory stores a program 1204. The program 1204 may be run by the processor 1201 to generate instructions 1203, to enable the processor 1201 to perform, according to the instruction 1203, the method described in the foregoing method embodiment. Optionally, the memory 1202 may further store data. Optionally, the processor 1201 may further read the data stored in the memory 1202. The data and the program 1204 may be stored at a same storage address, or the data and the program 1204 may be stored at different storage addresses.

The processor 1201 and the memory 1202 may be disposed separately, or may be integrated, for example, integrated into a system on chip (System on Chip, SoC) of the electronic device.

For a specific manner in which the processor 1201 performs an application multi-window display method, refer to related descriptions in the method embodiment.

It should be understood that steps in the foregoing method embodiment may be implemented through a logic circuit in a form of hardware or instructions in a form of software in the processor 1201. The processor 1201 may be a CPU, a digital signal processor (Digital Signal Processor, DSP), a field programmable gate array (Field Programmable Gate Array, FPGA), or another programmable logic device, for example, a discrete gate, a transistor logic device, or a discrete hardware component.

This application further provides a computer program product. When the computer program product is executed by the processor 1201, the method in any method embodiment of this application is implemented.

The computer program product may be stored in the memory 1202, and is, for example, the program 1204. After undergoing processing procedures such as preprocessing, compilation, assembly, and linking, the program 1204 is finally converted into an executable target file that can be executed by the processor 1201.

This application further provides a computer-readable storage medium. The computer-readable storage medium stores a computer program. When the computer program is executed by a computer, the method in any method embodiment of this application is implemented. The computer program may be a high-level language program, or may be an executable target program.

The computer-readable storage medium is, for example, the memory 1202. The memory 1202 may be a volatile memory or a non-volatile memory, or the memory 1202 may include both the volatile memory and the non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (SynchLink DRAM, SLDRAM), and a direct rambus random access memory (Direct Rambus RAM, DRRAM).

It may be clearly understood by persons skilled in the art that, for ease and brevity of description, for a specific working procedure and generated technical effect of the foregoing apparatus and device, refer to a corresponding procedure and corresponding technical effect in the foregoing method embodiment. Details are not described herein again.

In the several embodiments provided in this application, the disclosed systems, apparatuses, and methods may be implemented in other manners. For example, some features of the method embodiments described above may be ignored or not performed. The apparatus embodiment described above is merely an example. Division into the units is merely logical function division, and may be other division during actual implementation. A plurality of units or components may be combined or integrated into another system. In addition, a coupling between the units or a coupling between the components may be a direct coupling or an indirect coupling. The coupling may include an electrical connection, a mechanical connection, or another form of connection.

The foregoing embodiments are intended merely for describing the technical solutions of this application, but not for limiting the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

Finally, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application multi-window display method, wherein the method is applied to an electronic device, and the method comprises:
receiving a first operation of a user, wherein the first operation is used to start an application, the application supports an app multiplier mode, the app multiplier mode comprises a first window and a second window, the first window corresponds to a component started by the application, and the second window corresponds to a component created by a system of the electronic device;
in response to the first operation, creating, by the electronic device, an activity object and starting the component created by the system, wherein the activity object comprises a process name and a unique identifier of the application; and
starting, in a process of the application based on the process name and the unique identifier of the application in the activity object, the component created by the system.

2. The method according to claim 1, wherein before creating, by the electronic device, the activity object, the method further comprises:
determining, by the system of the electronic device, the process name and the unique identifier of the application based on the first operation.

3. The method according to claim 2, wherein the process name and the unique identifier of the application are stored in a first field of an intent.

4. The method according to claim 3, wherein creating, by the electronic device, the activity object comprises:
creating, by the electronic device, an empty activity object, reading the process name and the unique identifier in the first field, and storing the process name and the unique identifier in the empty activity object, to obtain the activity object.

5. The method according to claim 3 or 4, wherein the first field comprises an extra field.

6. The method according to any one of claims 1 to 5, wherein the starting, in the process of the application based on the process name and the unique identifier of the application in the activity object, the component created by the system comprises:
when the process name and the unique identifier of the application in the activity object match a process name and a unique identifier of a currently running process, starting, in the currently running process, the component created by the system; or
when the process name and the unique identifier of the application in the activity object do not match the process name and the unique identifier of the currently running process, creating a new process based on the process name and the unique identifier of the application in the activity object, and starting, in the new process, the component created by the system.

7. The method according to any one of claims 1 to 6, wherein an activity created by the system is stored in a jar package that is of the system and that is loaded when the application is started.

8. The method according to any one of claims 1 to 7, wherein in response to the first operation, display statuses of a drag component of the first window and a drag component of the second window are consistent.

9. The method according to any one of claims 1 to 8, wherein both a drgbar of the first window and a drgbar of the second window are highlighted, the drag component of the first window comprises the drgbar of the first window, and the drag component of the second window comprises the drgbar of the second window.

10. The method according to any one of claims 1 to 9, wherein the second window is displayed on a display of the electronic device in a full-screen mode or as a floating-window.

11. The method according to any one of claims 1 to 10, wherein when the application is started, verification on a package name and a unique identifier of the component created by the system is skipped.

12. The method according to any one of claims 1 to 11, wherein an operating system of the electronic device is an Android operating system.

13. An electronic device, comprising a memory and a processor, wherein the memory is configured to store a computer program, and the processor is configured to perform the method according to any one of claims 1 to 12 when invoking the computer program.

14. The electronic device according to claim 13, wherein the electronic device is any one of a mobile phone, a tablet, a personal computer, or a head unit.

15. The electronic device according to claim 13 or 14, wherein an operating system of the electronic device is an Android operating system.

16. A computer-readable storage medium, wherein the computer-readable storage medium stores a computer program, and when the computer program is executed by a processor, the method according to any one of claims 1 to 12 is implemented.

17. A computer program product, wherein when the computer program product runs on an electronic device, the electronic device is enabled to perform the method according to any one of claims 1 to 12.
